# EUROPÄISCHE PATENTSCHRIFT

(11) **EP 0 666 965 B1**
(45) Veröffentlichungstag und Bekanntmachung des Hinweises auf die Patenterteilung: **28.05.1997**
(21) Anmeldenummer: 93924545.2
(22) Anmeldetag: 29.10.1993
(51) Int. Cl.: F16B 5/02, E04B 2/86

(54) **VERBINDUNG ZWISCHEN ZWEI ODER MEHREREN PROFILELEMENTEN ODER ZWISCHEN MONTAGETEILEN UND EINEM ODER MEHREREN PROFILELEMENTEN**
CONNECTION BETWEEN TWO OR MORE PROFILED ELEMENTS OR BETWEEN MOUNTING UNITS AND ONE OR MORE PROFILED ELEMENTS
LIAISON ENTRE DEUX ELEMENTS PROFILES OU PLUS OU BIEN ENTRE DES PIECES DE MONTAGE ET UN OU PLUSIEURS ELEMENTS PROFILES

(30) Priorität: 02.11.1992 DE 4237019
(43) Veröffentlichungstag der Anmeldung: 16.08.1995
(73) Patentinhaber: SFS Industrie Holding AG, 9435 Heerbrugg (CH)
(72) Erfinder: MONCHAUX, André, F-07130 Soyons (FR); RIGOLLIER, Hervé, F-26120 Chabeuif (FR)
(74) Vertreter: Ludescher, Hans
(86) Internationale Anmeldenummer: EP9303016
(87) Internationale Veröffentlichungsnummer: WO9410460

(56) Entgegenhaltungen:
- WO-A-89/12722
- FR-A- 2 131 768
- FR-A- 2 139 717
- GB-A- 1 253 544

## Beschreibung

Die Erfindung betrifft Profilelemente mit einer als Schraube ausgeführten Verbindung, wobei zwei oder mehrere Profilelemente oder Montageteile und eines oder mehrere Profilelemente mit einer aus einem Bohrteil, einem zumindest teilweise über dessen Länge mit einem Gewindeteil versehenen Schaft und einem Schraubenkopf bestehenden Schraube miteinander verbunden sind. Gerade im Fenster-, Türen-, Trennwand- und Fassadenbau werden vielfach Profilelemente, z.B. Aluminium-Hohlprofile, sonstige Metall-Hohlprofile oder Profile mit abstehenden Stegen, eingesetzt, wobei diese Profilelemente und gegebenenfalls zusätzliche Montageteile fest miteinander verbunden werden müssen. Bisher wurden an den für eine Verbindung vorgesehenen Stellen Löcher vorgebohrt, in welche dann entweder ein Gewinde geschnitten und die Schraube eingesetzt oder aber eine selbstgewindeformende Schraube, z.B. nach Art einer Blechschraube, eingedreht wurde.

Die gegenseitige Befestigung solcher Profilelemente und gegebenenfalls zusätzlicher Montageteile war daher von einem enormen Arbeitsaufwand gekennzeichnet, da jeweils zumindest zwei Arbeitsgänge (Bohren und Eindrehen der Schraube) notwendig waren. Außerdem hat sich beim nachträglichen Eindrehen der Schrauben als Problem herausgestellt, daß ein festes, gegenseitiges Anpressen der miteinander zu verbindenden Profilelemente bzw. der zusätzlichen Montageteile kaum möglich war, da ja die Gewindeteile der Schrauben jeweils in zwei oder mehrere Stege oder Wandungsteile eingegriffen haben.

Die vorliegende Erfindung hat sich daher zur Aufgabe gestellt, gerade für diesen besonderen Einsatzzweck eine Schraube zu schaffen, mit welcher in optimaler Weise das Loch gebohrt, das Gewinde geschnitten und die notwendige Anpreßkraft zwischen den miteinander zu verbindenden Profilelementen bzw. Montageteilen erzielt wird.

Erfindungsgemäß wird zur Lösung dieser Aufgabe vorgeschlagen,
- daß die Summe aus der Länge des Bohrteiles und der Länge des Gewindeteiles der Schraube gleich oder kleiner ist als der lichte Abstand zwischen zwei in Einbohr- bzw. Einschraubrichtung aufeinander folgenden Stegen oder Wandungsteilen eines oder mehrerer miteinander zu verbindender Profilelemente und gegebenenfalls Montageteile oder
- die Länge des Bohrteiles der Schraube gleich oder größer ist als die Summe aus lichtem Abstand zwischen zwei in Einbohr- bzw. Einschraubrichtung aufeinander folgenden Stegen oder Wandungsteilen der miteinander zu verbindenden Profilelemente und gegebenenfalls Montageteile und aus der Dicke der beiden aufeinander folgenden Stege oder Wandungsteile,
- und daß die Länge des Gewindeteiles der 1,5- bis 4-fachen Dicke des Steges oder Wandungsteiles entspricht, in welchen der Gewindeteil als Befestigungselement eingreift.

Durch diese erfindungsgemäßen Maßnahmen wird einerseits erreicht, daß der Gewindeteil bei keinem Bohrvorgang im Eingriff mit einem Steg oder Wandungsteil steht, was eben gerade deshalb von Bedeutung ist, weil der Bohrvorschub in der Regel wesentlich kleiner ist als der Vorschub beim Eingriff eines Gewindes in einen entsprechenden Teil. Andererseits ist die Möglichkeit geschaffen worden, daß aufeinander folgende Stege oder Wandungsteile relativ rasch durchbohrt werden können, da der jeweils nach einem Bohrvorgang durch den entsprechenden Steg oder Wandungsteil durchzudrehende Gewindeteil sehr kurz ist.

Die Schraube ist bereits entsprechend achsgenau ausgerichtet im ersten zu durchbohrenden Steg bzw. Wandungsteil geführt, so daß bereits beim Eintritt des Bohrteiles in den nächstfolgenden Steg oder das nächstfolgende Wandungsteil ein exaktes Ansetzen ermöglicht wird.

Es ist bereits ein Bewehrungsgebilde bekannt geworden (WO 89/12722), welches gitterträgerartig ausgeführt ist und für die Herstellung einer Betonplatte dient. Dieses Bewehrungsgebilde besteht aus zwei voneinander distanzierten Flachstegen gleicher Breite und aus diese verbindenden, seitlich an den Flachstegen angeschweißten Gitterstäben. Es sind dabei die Flachstege soweit von den zum Ausgießen mit Beton vorgesehenen Schalplatten entfernt, daß eine Betonumhüllung der Flachstege möglich ist. Hierbei wird das Vorhandensein dieser Flachstege ausgenützt, um die Schalplatten an diesen Bewehrungsgebilden zu befestigen. Zu diesem Zweck wird ein Befestigungselement in Form einer Schraube eingesetzt, welche die Schalplatte durchdringt und mit einem Gewindeabschnitt im Flachsteg des Bewehrungsgebildes eingreift. Es wird dabei darauf geachtet, daß der Gewindebereich bereits die Schalplatte durchdrungen hat, wenn der Bohrvorgang durch die Schraube im Flachsteg beginnt. Hier wird mit der Länge des Gewindes großzügig umgegangen, zumal bei einer solchen Anwendung keinerlei Probleme mit in relativ kurzem Abstand aufeinander folgenden Wandungen oder Montageteilen entstehen können.

Bei der vorliegenden Erfindung ist es gleichgültig, wieviele Stege oder Wandungsteile mit einer einzigen Schraube durchdrungen werden, denn es ist immer gewährleistet, daß das Gewinde schlußendlich nur in jenem Steg bzw. Wandungsteil den notwendigen Eingriff hat, welcher eben für den Eingriff des Gewindeteiles vorgesehen ist. Durch Einhalten eines entsprechenden Anzugsmomentes kann die erforderliche Anpreßkraft zwischen den zu verbindenden Profilelementen bzw. zwischen den Profilelementen und Montageteilen erreicht werden. Gerade durch diese spezielle Anpassung einer Verbindung für einen ganz spezifischen Einsatzzweck werden bei den Herstellungsarbeiten von Fenstern, Türen, Trennwänden und Fassaden wesentliche Vorteile erreicht. Dadurch, daß das Vorbohren wegfällt, bedarf es nicht einer exakten gegenseitigen Lagesicherung bei jedem Bohrvorgang, damit nachträglich auch die Achsrichtung der Löcher beim Eindrehen der Schraube übereinstimmt. Mittels der erfindungsgemäßen Maßnahmen ist eine wesentlich rationellere und somit auch kostengünstigere Verbindung zwischen zwei oder mehreren Profilelementen und gegebenenfalls zusätzlichen Montageteilen möglich geworden. Es ist durchaus klar, daß für jede spezielle Ausbildung von Profilelementen und gegebenenfalls Montageteilen verschiedene Längen und Varianten bezüglich des Gewinde- und des Bohrteiles erforderlich sind, doch kann gerade bei Einhaltung der erfindungsgemäßen Maßnahmen auch schon mit einer vernünftigen Variantenzahl ein großer Einsatzbereich abgedeckt werden.

Stege und Wandungsteile solcher Profilelementen oder zu befestigender Montageteile sind in der Regel relativ dünn. Es muß daher nur ein entsprechendes Gewinde vorhanden sein, welches ordnungsgemäß in diesen Steg bzw. Wandungsteil eingreift. Daher wird vorgeschlagen, daß die Länge des Gewindeteiles der 1,5- bis 4-fachen Dicke des Steges oder Wandungsteiles entspricht, in welchen der Gewindeteil als Befestigungselement eingreift.

Ferner wird vorgeschlagen, daß zwischen dem unmittelbar an den Bohrteil anschließenden Gewindeteil und dem Schraubenkopf ein gewindefreier Schaftabschnitt vorgesehen ist. Durch einen glatten, gewindefreien Schaftabschnitt ist auch die erforderliche seitliche Absicherung der miteinander zu verbindenden Profilelemente bzw. Montageteile gewährleistet, da dieser Schaftabschnitt nach inetwa annähernder Passung in die von der Schraube selbst hergestellten Bohrungen eingreift, wobei die jeweils in diesen Stegen bereits eingeschnittenen Gewinde für eine solche seitliche Abstützung keinerlei negative Auswirkung haben.

Dazu trägt auch bei, daß der Durchmesser des gewindefreien Schaftabschnittes zumindest annähernd dem Durchmesser des Bohrteiles entspricht.

Weiters wird vorgeschlagen, daß die Länge des Schaftabschnittes der Schraube zwischen der Unterseite des Schraubenkopfes bis zur Mitte bezogen auf die Länge des Gewindeteiles dem Abstand von der Auflage des Schraubenkopfes bis zur Mitte der Dicke jenes Steges oder Wandungsteiles entspricht, in welchem der Gewindeteil nach dem Setzvorgang verankert ist. Es ist also eine spezielle Anpassung an eine besondere Verbindung zwischen zwei oder mehreren Profilelementen oder zwischen Montageteilen und einem oder mehreren Profilelementen möglich. Der Setzvorgang wird wesentlich erleichtert, die gegenseitige feste Verspannung der zu verbindenden Teile wird ermöglicht, und es ist eben nur noch ein Arbeitsgang erforderlich.

Es ist einfach ein einmaliges Eindrehen einer Schraube notwendig, wobei durch eine entsprechende Drehmomentabschaltung des Schraubers eine optimale Anzugskraft erreicht wird.

Allein schon beim Eindrehen einer solchen Schraube sind die einzelnen von eben dieser einzigen Schraube durchgeführten Arbeitsschritte (Bohren/Gewindedurchdrehen, Bohren/Gewindedurchdrehen usw.) je nach Anzahl der zu durchbohrenden Stege oder Wandungsteile exakt hörbar. Es ist somit für den Benutzer einer erfindungsgemäßen Verbindung praktisch eine zusätzliche Kontrolle durch das Gehör möglich, weil eben die einzelnen aufeinander folgenden Arbeitsschritte und das schlußendliche, drehmomentbedingte Abschalten des Schraubers wahrgenommen werden können.

Weitere erfindungsgemäße Merkmale und besondere Vorteile werden in der nachstehenden Beschreibung anhand der Zeichnung noch näher läutert. Es zeigen:
- Fig. 1: eine Schraube, welche durch zwei Stege von Profilelementen durchzudrehen ist;
- Fig. 2: eine Draufsicht auf den Kopf der Schraube;
- Fig. 3: ein Einsatzbeispiel einer solchen Schraube bei einer Verbindung von drei Profilelementen;
- Fig. 4: ein Ausführungsbeispiel, ebenfalls im Schnitt dargestellt, aus welchem eine Verbindung zwischen zwei Profilelementen ersichtlich ist, wobei das zweite Profilelement auch als Montageteil ausgeführt sein könnte;
- Fig. 5 bis Fig. 9: einen Auszug aus verschiedenen Ausführungsvarianten einer Schraube für den Einsatz als Verbindung zwischen Profilelementen und gegebenenfalls Montageteilen.

Zur Verbindung von zwei oder mehreren Profilelementen 1, 2 ist eine Schraube 3 vorgesehen, welche einen Bohrteil 4, einen zumindest teilweise über dessen Länge mit einem Gewindeteil 5 versehenen Schaft 6 und einen Schraubenkopf 7 aufweist. Der Schraubenkopf 7 ist zweckmäßig mit einer besonderen Angriffsöffnung 8 versehen, damit die Schraube beim Eindrehen achsgenau ausgerichtet mit der Schrauberachse eingedreht werden kann.

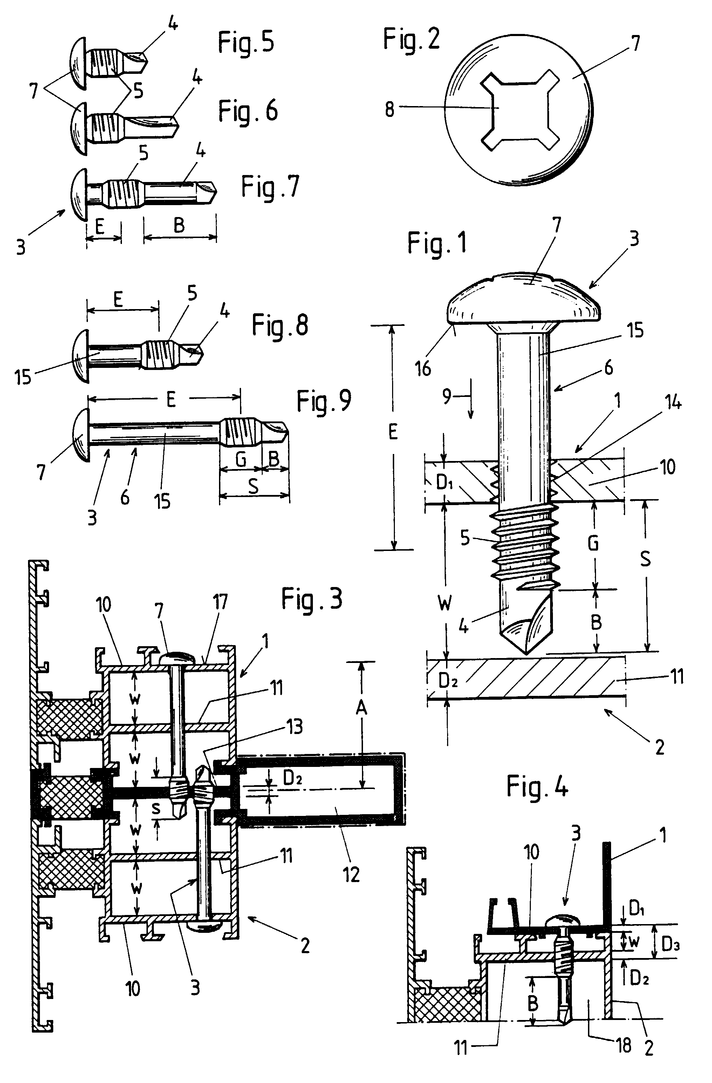

Für den erfindungsgemäßen Einsatz einer solchen Verbindung sind an der Schraube 3 besondere Bemessungsgrundlagen vorzusehen. Dabei ist die Summe S aus der Länge B des Bohrteiles 4 und der Länge G des Gewindeteiles 5 gleich oder kleiner als der lichte Abstand W zwischen zwei in Einbohr- bzw. Einschraubrichtung 9 aufeinander folgenden Stegen 10, 11 oder entsprechenden Wandungsteilen. Eine solche Schraube ist beispielsweise bei einem Anwendungsfall einsetzbar, wie er in Fig. 3 dargestellt ist. Die beiden Profilelemente 1 und 2 sollen hier an gegenüberliegenden Bereichen eines dritten Profiles 12 befestigt werden. Es ist hier eindeutig ersichtlich, daß die Summe S aus den Längen B und G gleich oder kleiner ist als der lichte Abstand W zwischen aufeinander folgenden Stegen bzw. zwischen dem Steg 11 und dem eingeschobenen Steg 13 des Profils 12. Jeweils dann, wenn der Gewindeteil 5 den einen Steg 10 durchlaufen hat, wenn also der oberste, dem Schraubenkopf 7 zugewandte Gewindegang diesen Steg 10 verläßt, beginnt der Bohrvorgang im nächstfolgenden Steg 11, so daß niemals ein erzwungener größerer Bohrvorschub gegeben ist, welcher durch ein noch im Eingriff stehendes Gewinde ausgelöst werden könnte. Es ist daher immer eine saubere Bohrung und somit auch nie eine Beschädigung des Gewindeteiles 5 möglich. Gerade diese schonende Wirkung auf den Gewindeteil 5 ist von besonderem Vorteil, weil der Gewindeteil ja in zwei oder mehreren Stegen oder Wandungsteilen ein Gewinde schneiden und dann im letzten dieser Stege oder Wandungsteile eben nochmals ein ordnungsgemäßes Gewinde formen muß, in welchem dann der Gewindeteil 5 ein entsprechend großes Anzugsmoment zu übertragen hat.

Das in den jeweils durchbohrten Stegen 10 zurückbleibende Gewinde 14 stört keinesfalls, da ja der zwischen dem Schraubenkopf 7 und dem Gewindeteil 5 vorgesehene gewindefreie Schaftabschnitt 15 an den Bohrungswänden zur Anlage kommt.

Damit ein ordnungsgemäßer Eingriff des Gewindes 5 im schlußendlich dazu vorgesehenen Steg 10, 11 oder 13 möglich wird, weist der Gewindeteil 5 zweckmäßig eine Länge G auf, welche der 1,5- bis 4-fachen Dicke des Steges 10, 11 oder 13 entspricht, in welchen der Gewindeteil 5 als Befestigungselement eingreift. Dadurch ist gewährleistet, daß ober- und unterhalb des entsprechenden Steges 10, 11 oder 13 noch ausreichend Gewindeabschnitt vorhanden ist. Um eine besonders kurze Bauweise der Schraube 3 gerade im Bereich des Bohrteiles 4 und des Gewindeteiles 5 zu erzielen, wird der Gewindeteil 5 vorteilhaft unmittelbar an den Bohrteil 4 anschließend gefertigt, so daß sich dann je nach Gesamtlänge der Schraube 3 ein entsprechend langer gewindefreier Schaftabschnitt 15 am Schraubenschaft 6 ergibt. Der Durchmesser des gewindefreien Schaftabschnittes 15 entspricht zumindest annähernd dem Durchmesser des Bohrteiles 4. Dadurch kann dieser gewindefreie Schaftabschnitt 15 ohne besondere Reibungsprobleme in den bereits hergestellten und mit einem Gewinde versehenen Bohrungen weitergedreht werden.

Wie gerade aus Fig. 3 und auch aus den Beispielen nach den Fig. 7 bis 9 ersichtlich ist, entspricht die Länge E des Schaftabschnittes der Schraube zwischen der Unterseite 16 des Schraubenkopfes bis zur Mitte bezogen auf die Länge G des Gewindeteiles 5 dem Abstand A von der Auflage 17 des Schraubenkopfes 7 bis zur Mitte der Dicke D2 jenes Steges 13, in welchem der Gewindeteil 5 nach dem Setzvorgang schlußendlich verankert ist. Es ist also eine relativ genaue Anpassung der Schrauben an die miteinander zu verbindenden Profilelemente bzw. die miteinander zu verbindenden Profilelemente und Montageteile notwendig, wobei aber mit verschiedenen Ausführungsvarianten in doch großen Bereichen das Auslangen gefunden wird.

Eine zweite besondere Ausführungsvariante einer Schraube zur Verbindung zwischen zwei Profilelementen oder zwischen Montageteilen und einem Profilelement ist dann gegeben, wenn der lichte Abstand W zwischen zwei aufeinander folgenden Stegen 10, 11 relativ klein ist. Eine solche Ausführungsvariante ist der Fig. 4 und entsprechend den Möglichkeiten nach den Fig. 6 und 7 zu entnehmen. Der lichte Abstand W ist hier so klein, daß es unmöglich wäre, für eine entsprechende Haltekraft der einzusetzenden Schraube die Summe S aus der Länge des Bohrteiles und der Länge des Gewindeteiles kleiner zu halten als eben dieser lichte Abstand W. Es wird in einem solchen Falle vorgeschlagen, die Länge B des Bohrteiles 4 gleich oder größer auszuführen als die Summe D3 aus lichtem Abstand W zwischen zwei in Einbohr- bzw. Einschraubrichtung aufeinander folgenden Stegen 10, 11 und aus der Dicke D1 sowie D2 der beiden aufeinander folgenden Stege 10, 11. In diesem Falle wird es also zuerst zu einem Durchbohren sowohl des Steges 10 als auch des Steges 11 kommen, bevor der Gewindeteil 5 vorerst in den Steg 10 und anschließend in den Steg 11 eingreift, wobei der Gewindeteil 5 bei den letzten Umdrehungen der Schraube 3 nur noch mit dem Steg 11 und nicht mehr mit dem Steg 10 in Eingriff steht. Es ist daher auch auf diese Weise ein entsprechendes Anzugsmoment und somit eine gegenseitige Anpreßkraft der miteinander zu verbindenden Profilelemente möglich.

Eine solche Ausführungsvariante setzt voraus, daß der an den Steg 11 bzw. einen entsprechenden Wandungsteil anschließende Hohlraum 18 so größ ist, daß der Bohrteil 4 und der erste Abschnitt des Gewindeteiles 5 Platz finden, ohne daß der Bohrteil 4 bereits an einen nächsten Steg anstößt.

Es sind also individuelle Lösungen für alle Arten von Verbindungen zwischen zwei oder mehreren Profilelementen oder zwischen Montageteilen und einem oder mehreren Profilelementen möglich, wobei eine Anpassung der Schraube an diese verschiedenen Varianten erforderlich ist und die vorgegebenen Bestimmungen jeweils einzuhalten sind. Daß darüberhinaus verschiedene Variantenabweichungen denkbar sind, z.B. in bezug auf die Ausbildung des Bohrteiles, des Gewindeteiles oder des gewindefreien Schaftabschnittes oder aber auch in bezug auf den Schraubenkopf und den speziellen Angriff, ist selbstverständlich. Es muß also stets eine entsprechende Gesamtlänge von Bohrteil und Gewindeteil oder eine entsprechende Länge des Bohrteiles für sich zur Verfügung stehen, wobei je nach Einsatzzweck ein kürzerer oder längerer gewindefreier Schaftabschnitt zur Verfügung steht.

Die erfindungsgemäße Verbindung ist sowohl bei Profilelementen bzw. Montageteilen aus Aluminium als auch bei sonstigen Metall-Profilen und Montageteilen einsetzbar. Natürlich sind Schrauben mit den erfindungsgemäßen Maßnahmen auch bei Kunststoff-Profilelementen und -Montageteilen einsetzbar. Dabei ist es gleichgültig, ob es sich um reine Kunststoff-Profilelemente oder um Kunststoff-Profilelemente mit zur Verstärkung eingeschobenen Metall-Profilen handelt.

Bei den dargestellten Einsatzbeispielen sind die Schrauben jeweils rechtwinklig zur Ebene der einzelnen Stege bzw. Wandungsteile eingedreht worden. Es ist auch denkbar, daß solche Schrauben gerade bei speziellen Einsatzzwecken in Profilelementen oder Montageteilen in einem spitzen Winkel zu den Stegen 10, 11 bzw. 13 eingesetzt werden, was bei der erfindungsgemäßen Ausbildung einer Schraube ohne Probleme möglich ist.

## Patentansprüche

1. Profilelemente mit einer als Schraube ausgeführten Verbindung, wobei zwei oder mehrere Profilelemente oder Montageteile und eines oder mehrere Profilelemente mit einer aus einem Bohrteil (4), einem zumindest teilweise über dessen Länge mit einem Gewindeteil (5) versehenen Schaft (6) und einem Schraubenkopf (7) bestehenden Schraube (3) miteinander verbunden sind, **dadurch gekennzeichnet,**
• daß die Summe (S) aus der Länge (B) des Bohrteiles (4) und der Länge (G) des Gewindeteiles (5) der Schraube (3) gleich oder kleiner ist als der lichte Abstand (W) zwischen zwei in Einbohr- bzw. Einschraubrichtung (9) aufeinander folgenden Stegen (10, 11, 13) oder Wandungsteilen eines oder mehrerer miteinander zu verbindender Profilelemente (1, 2, 12) und gegebenenfalls Montageteile oder
• die Länge (B) des Bohrteiles (4) der Schraube (3) gleich oder größer ist als die Summe (D3) aus lichtem Abstand (W) zwischen zwei in Einbohr- bzw. Einschraubrichtung (9) aufeinander folgenden Stegen (10, 11) oder Wandungsteilen der miteinander zu verbindenden Profilelemente (1,2) bzw. gegebenenfalls Montageteile und aus der Dikke (D1, D2) der beiden aufeinander folgenden Stege (10, 11) oder Wandungsteile,
• und daß die Länge (G) des Gewindeteiles (5) der 1,5- bis 4-fachen Dicke (D1, D2) des Steges (10, 11) oder Wandungsteiles entspricht, in welchen der Gewindeteil (5) als Befestigungselement eingreift.

2. Profilelemente nach Anspruch 1, dadurch gekennzeichnet, daß zwischen dem unmittelbar an den Bohrteil (4) anschließenden Gewindeteil (5) und dem Schraubenkopf (7) ein gewindefreier Schaftabschnitt (15) vorgesehen ist.

3. Profilelemente nach Anspruch 1, dadurch gekennzeichnet, daß der Durchmesser des gewindefreien Schaftabschnittes (15) zumindest annähernd dem Durchmesser des Bohrteiles (4) entspricht.

4. Profilelemente nach Anspruch 1 und/oder einem der Ansprüche 2 bis 3, dadurch gekennzeichnet, daß die Länge (E) des Schaftabschnittes der Schraube (3) zwischen der Unterseite (16) des Schraubenkopfes (7) bis zur Mitte bezogen auf die Länge (G) des Gewindeteiles (5) dem Abstand (A) von der Auflage (17) des Schraubenkopfes (7) bis zur Mitte der Dicke (D2) jenes Steges (10, 11, 13) oder Wandungsteiles entspricht, in welchem der Gewindeteil (5) nach dem Setzvorgang verankert ist.

## Claims

1. Profile elements with a connection in the form of a screw, wherein two or more profile elements or assembly of parts and one or more profile elements are connected to one another with a screw (3) comprising a drill part (4), a shank (6) provided at least partly over its length with a threaded portion (5) and a screw head (7), characterised in
- that the sum (S) of the length (B) of the drill part (4) and the length (G) of the threaded portion (5) of the screw (3) is equal to or smaller than the unobstructed distance (W) between two webs (10,11,13) succeeding one another in the drilling or screwing direction (9) or wall parts of one or more profile elements (1,2,12) and an optional assembly of parts to be connected together, or
- the length (B) of the drill part (4) of the screw (3) is equal to or greater than the sum (D3) of the unobstructed distance (W) between two webs (10,11) succeeding one another in the drilling or screwing direction (9) or wall parts of the profile elements (1,2) and/or an optional assembly of parts to be connected together, and of the thickness (D1,D2) of the two webs (10,11) succeeding one another or wall parts,
- and that the length (G) of the threaded portion (5) corresponds to 1.5 to 4 times the thickness (D1,D2) of the web (10,11) or wall part in which the threaded portion (5) engages as a securing element.

2. Profile elements according to Claim 1, characterised in that a threadless shank portion (15) is provided between the threaded portion (5) directly adjoining the drill part (4) and the screw head (7).

3. Profile elements according to Claim 1, characterised in that the diameter of the threadless shank portion (15) corresponds at least approximately to the diameter of the drill part (4).

4. Profile elements according to Claim 1 and/or either one of Claims 2 and 3, characterised in that the length (E) of the shank portion of the screw (3) between the underside (16) of the screw head (7) and up to the middle in relation to the length (G) of the threaded portion (5), corresponds to the distance (A) from the bearing surface (17) of the screw head (7) as far as the middle of the thickness (D2) of each web (10,11,13) or wall part in which the threaded portion (5) is anchored after the setting operation.

## Revendications

1. Profilés reliés par vis, à savoir que deux ou plusieurs profilés ou pièces de montage et un ou plusieurs profilés sont reliés entre eux par une vis (3) constituée d'une partie de perçage (4), d'une tige (6) portant sur au moins une fraction de sa longueur, une partie filetée (5) et d'une tête (7),
caractérisés en ce que
. la somme (5) de la longueur (B) de la partie de perçage (4) et de la longueur (G) de la partie filetée (5) de la vis (3) est égale ou inférieure à l'espace (W) existant entre deux branches (10, 11, 13) ou parties de paroi se succédant dans la direction de perçage ou de vissage (9), et appartenant à un ou plusieurs profilés à assembler (1, 2, 12), ou éventuellement à des pièces de montage, ou bien,
. la longueur (B) de la partie de perçage (4) de la vis (3) est égale ou supérieure à la somme (D3) d'une part de l'espace (W) existant entre deux branches (10, 11) ou parties de paroi se succédant dans la direction de perçage ou de vissage (9) et appartenant aux profilés (1, 2) à assembler ou éventuellement à des pièces de montage, d'autre part de l'épaisseur (D1, D2) des deux branches (10, 11) se succédant ou des pièces de montage et,
. la longueur (G) de la partie filetée (5) correspond à 1,5 à 4 fois l'épaisseur (D1, D2) de la branche (10, 11) ou de la partie de paroi dans laquelle cette partie (5) est en prise en tant qu'organe de fixation.

2. Profilés selon la revendication 1,
caractérisés en ce qu'
une partie de tige (15), dépourvue de filetage, est prévue entre la partie filetée (5) se raccordant directement à la partie de perçage (4) et la tête de vis (7).

3. Profilés selon la revendication 1,
caractérisés en ce que
la partie de tige (15) dépourvue de filetage a un diamètre au moins proche de celui de la partie de perçage (4).

4. Profilés selon la revendication 1 et/ou une des revendications 2 à 3,
caractérisés en ce que
la longueur (E) de la partie de la tige de la vis (3) située entre la face inférieure (16) de la tête de vis (7) au milieu de la longueur (G) de la partie filetée (5) correspond à la distance (W) de la surface d'appui (17) jusqu'au milieu de la tête de vis (7) au milieu de l'épaisseur (D2) de chaque branche (10, 11, 13) ou partie de paroi dans laquelle la partie filetée (5) est ancrée après assemblage.
